# EUROPÄISCHE PATENTANMELDUNG

(11) **EP 1 967 569 A1**
(43) Veröffentlichungstag der Anmeldung: **10.09.2008**
(21) Anmeldenummer: 07002467.4
(22) Anmeldetag: 05.02.2007
(51) Int. Cl.: C10L 5/44

(54) **Brennstoff auf Basis von Holzkleinteilen**

(30) Priorität: 16.01.2007 EP 07000823
(71) Anmelder: Earthfly Holding GmbH, 6020 Innsbruck (AT)
(72) Erfinder: Peer, Thomas, 6170 Zirl in Tirol (AT)
(74) Vertreter: Kilian, Helmut

(57) **Zusammenfassung**

Die Erfindung betrifft einen Brennstoff, der aus Holzkleinteilen gebildet ist und einen Zusatzstoff auf Fettsäurebasis und/oder Getreidebasis und/Stärkebasis enthält. Durch diese Zugabe des Zusatzstoffes lagert der Brennstoff kein Wasser ein und bleibt leicht entzündlich. Darüber hinaus entsteht keine Gefährdung der mit diesem Brennstoff arbeitenden Menschen auf Grund von Feinstaub.

## Beschreibung

Die Erfindung betrifft einen Brennstoff, welcher Holzkleinteile aufweist, und ein Verfahren zur Herstellung dieses Brennstoffes, wobei die Holzkleinteile in Formstücke gepresst sein können.

Brennstoffe werden heutzutage in vielen Industriezweigen und privaten Haushalten benötigt. Fossile Brennstoffe wie Erdöl oder Gas werden von den Industriestaaten, deren Zahl im Rahmen der Globalisierung immer weiter wächst, verstärkt nachgefragt. Aus diesem Grund steigt der Preis der fossilen Brennstoffe immer weiter, wodurch die Bedeutung der alternativen Energiequellen wächst. Als nachwachsender Rohstoff spielt Holz bei der Frage der alternativen Brennstoffe eine große Rolle. Um Holz in eine als Brennstoff verwendbare Form zu bringen, werden Holzkleinteile, die entweder als Abfallprodukte in Holz verarbeitenden Betrieben entstehen oder extra für diese Anwendung hergestellt werden, in Formen gepresst. Als meist verwendete Form haben sich so genannte Pellets oder Brickets durchgesetzt. Der Heizwert dieser Pellets oder Brickets liegt gegenwärtig bei ungefähr 4,9kWh/kg, wobei dieser Wert abhängig von dem verwendeten Holz ist.

Ein Nachteil dieser gepressten Pellets oder Brickets ist die Tatsache, dass sie leicht Wasser aufnehmen und einlagern, wodurch die Entzündbarkeit des Brennstoffes herabgesetzt wird. Um solch eine Wassereinlagerung zu vermeiden, müssen die gepressten Formen in einer Wasser abhaltenden Verpackung transportiert und in einem trockenen Raum gelagert werden, was ihre Handhabung erschwert und den Preis des Brennstoffes erhöht.

Ein weiterer Nachteil dieser gepressten Formen ist die Verunreinigung der Umgebung in Form von Staub und Feinstaub und die damit einhergehende Gesundheitsgefährdung der damit arbeitenden Menschen. Aus diesem Grund müssen diese gepressten Formen an einem geeigneten Ort gelagert werden.

Es ist Aufgabe der Erfindung einen Brennstoff in Form von gepressten Holzkleinteilen und ein Verfahren zur Herstellung eines solchen Brennstoffes zu schaffen dessen Heizwert erhöht ist, der kein Wasser einlagert, die Umgebung, in der er gelagert wird, nicht verunreinigt und der keine Gesundheitsgefährdung der mit ihm arbeitenden Menschen darstellt.

Diese Aufgabe wird erfindungsgemäß durch die Merkmale des Patentanspruches 1 und des Patentanspruches 13 gelöst.

Bevorzugte Ausgestaltungen und Weiterbildungen der Erfindung sind Gegenstand der Unteransprüche.

Ein geeigneter Zusatzstoff kann Palmitinsäure oder Stearinsäure sein. Auch ein Gemisch dieser beiden Fettsäuren kann zur Anwendung kommen.

Darüber hinaus können neben der oben genannten Palmitinsäure oder Stearinsäure auch noch Laurinsäure, Myristinsäure und Ölsäure enthalten sein.

Weiterhin kann Palmöl als Zusatzstoff verwendet werden, das aus Palmitinsäure, Stearinsäure, Ölsäure, Myristinsäure und Linolsäure besteht.

Als Alternative zu dem Zusatzstoff auf Fettsäurebasis können auch Getreidesorten jeglicher Art oder Stärke verwendet werden. Diese Zusatzstoffe auf Fettsäurebasis, Getreidesorten oder Stärke, können sowohl rein als auch als Gemisch verwendet werden.

Weitere nicht abschließende Beispiele für Zusatzstoffe sind pflanzliche Öle und Fette wie Rapsöl, Rapsmethylester, Sonnenblumenöl, Leinöl, Baumöl, Kokosnussöl oder Fett, Palmölkerne, Sojaöl als auch Getreide und Stärke dieser Getreide wie Weizen, Reis, Mais, Roggen, Gerste, Hafer oder Hirse. Stärke könnte weiterhin aus Bohnen, Erbsen oder Kartoffeln gewonnen werden. Allgemein sind auch eiweissliefernde Pflanzen verwendbar.

Neben den pflanzlichen Ölen und Fetten sind auch tierische Öle und Fette denkbar.

Für diesen Zweck könnten auch Monokulturzüchtungen, d.h. Verbindungen verwendet werden, die eine Carboxyl-gruppe tragen und aus einer verschieden langen und strukturierten aber fast ausschließlich unverzweigten Kohlenwasserstoffkette bestehen.

Erwähnenswert hierbei sind die Tatsachen, dass es sich bei den Stoffen um natürlich nachwachsende Rohstoffe handelt, womit der Brennstoff weiterhin ein alternativer und ökologisch sinnvoller Brennstoff bleibt, und die geometrischen Abmaße des Brennstoffes gleich bleiben, während sich der Heizwert auf ungefähr 7,8kWh/kg erhöht. Somit kann bei gleich bleibender Lagerfläche die gelagerte Energie erhöht werden.

Pellets oder Brickets sind auch ein beliebter Ersatz für Grillkohle. Wird zu diesem Zweck der erfindungsgemäße Brennstoff verwendet, kann der Grill ohne Verunreinigungen an Händen oder Kleidung mit dem Brennstoff versehen und leicht entzündet werden.

Im Folgenden werden die Verfahren zur Herstellung des Brennstoffes und bevorzugte Zusammensetzungen des Zusatzstoffes auf Fettsäurebasis näher erläutert. Rohstoff oder Ausgangsstoff für die gepressten Formen sind Holzkleinteile, vorzugsweise Sägespäne oder Holzspäne, die in vielen Industriezweigen als Abfall- oder Restprodukte entstehen. Diese Holzkleinteile werden unter starkem Druck in Formen, vorzugsweise Pellets oder Brickets, gepresst. Erfindungsgemäß kann entweder der Ausgangsstoff, d.h. die Holzkleinteile, oder die gepresste fertige Form mit dem Zusatzstoff behandelt werden. Bei dieser Behandlung kann der Brennstoff in seiner Grund- oder Endform durch ein Bad mit dem Zusatzstoff über 62 Grad Celsius, vorzugsweise bei 70 Grad Celsius, geleitet werden. Alternativ kann der Zusatzstoff auf den Brennstoff in dem genannten Temperaturbereich aufgespritzt werden.

Eine bevorzugte Zusammensetzung des Zusatzstoffes besteht aus maximal 1 Gewichts% Laurinsäure, maximal 3 Gewichts% Myristinsäure, zwischen 50 und 60 Gewichts% Palmitinsäure, zwischen 40 und 50 Gewichts% Stearinsäure und Spuren von Ölsäure oder aus maximal 1 Volumen% Laurinsäure, maximal 3 Volumen% Myristinsäure, zwischen 50 und 60 Volumen% Palmitinsäure, zwischen 40 und 50 Volumen% Stearinsäure und Spuren von Ölsäure.

Weiterhin kann als Zusatzstoff gängiges Palmöl verwendet werden, das aus folgenden Anteilen in Gewichts-% besteht:

Myristinsäure 2%, Palmitinsäure 42%, Stearinsäure 5%, Ölsäure 41% und Linolsäure 10%.

Wie oben erwähnt können als Zusatzstoff auch weitere pflanzliche Öle oder Fette, Getreidearten oder Stärke in Frage kommen. Die Mischverhältnisse können beliebig gewählt werden, sollten aber bei fertiger Zusammensetzung 2 % nicht unterschreiten. Bei der %-Angabe handelt es sich um Gewichts%.

Liegen die Zusatzstoffe bei Raumtemperatur in flüssiger Form vor, können die Holzkleinteile in einem kalten Bad behandelt werden. Auch das Aufspritzverfahren kann in diesem Fall kalt durchgeführt werden.

Die Getreidesorten oder die Stärken werden mit den Holzkleinteilen durchmischt und zusammen mit diesen in die gewünschte Form gepresst. Für eine bessere Bildung und Stabilität der Formen ist es vorzuziehen, das Getreide vorher zu zerkleinern und in Schrotform zu verwenden.

Wahlweise können die Formen dann weiterhin mit pflanzlichen Ölen oder Fetten behandelt werden. Auf diese Art und Weise kann jedes Mischverhältnis zwischen festen und flüssigen Zusatzstoffen mit den Holzkleinteilen erreicht werden, was aber nicht ausschließt, die Zusatzstoffe jeweils einzeln zu verwenden.

## Patentansprüche

1. Brennstoff, welcher Holzkleinteile aufweist,
wobei
die Holzkleinteile einen Zusatzstoff auf Fettsäurebasis und/oder Getreidebasis und/oder Stärkebasis enthalten.

2. Brennstoff gemäß Anspruch 1,
**dadurch gekennzeichnet, dass** die Holzkleinteile in Formstücke gepresst sind.

3. Brennstoff gemäß Anspruch 1 oder 2,
**dadurch gekennzeichnet, dass** der Zusatzstoff aus Palmitinsäure und/oder Stearinsäure besteht.

4. Brennstoff gemäß Anspruch 1 oder 2,
**dadurch gekennzeichnet, dass** der Zusatzstoff aus Palmitinsäure, und/oder Stearinsäure und aus Laurinsäure, Myristinsäure und Ölsäure besteht.

5. Brennstoff gemäß Anspruch 4,
**dadurch gekennzeichnet, dass** der Zusatzstoff aus 50 bis 60% Palmitinsäure, 40 bis 50% Stearinsäure, maximal 1% Laurinsäure, maximal 3% Myristinsäure und Spuren von Ölsäure besteht.

6. Brennstoff gemäß Anspruch 1 oder 2,
**dadurch gekennzeichnet, dass** der Zusatzstoff aus Palmitinsäure und/oder Stearinsäure und aus Ölsäure, Myristinsäure und Linolsäure besteht.

7. Brennstoff gemäß Anspruch 6,
**dadurch gekennzeichnet, dass** der Zusatzstoff aus 42 Gewichts-% Palmitinsäure, 5 Gewichts-% Stearinsäure, 41 Gewichts-% Ölsäure, 2 Gewichts-% Myristinsäure und 10 Gewichts-% Linolsäure besteht.

8. Brennstoff gemäß Anspruch 1 oder 2, **dadurch gekennzeichnet, dass** der Zusatzstoff auf Fettsäurebasis pflanzliches Öl oder Fett umfasst.

9. Brennstoff gemäß Anspruch 8, **dadurch gekennzeichnet, dass** das pflanzliche Öl oder Fett Rapsöl, Sonnenblumenöl, Leinöl, Ölbaumöl, Palmöl, Kokosnussöl oder Sojaöl ist.

10. Brennstoff gemäß Anspruch 9, **dadurch gekennzeichnet, dass** das pflanzliche Öl in Form seines geschroteten Ausgangsstoffes enthalten ist.

11. Brennstoff gemäß Anspruch 1 oder 2, **dadurch gekennzeichnet, dass** das Getreide Weizen, Reis, Mais, Roggen, Gerste, Hafer oder Hirse ist.

12. Brennstoff gemäß Anspruch 11, **dadurch gekennzeichnet, dass** das Getreide in Schrotform enthalten ist.

13. Verfahren zur Herstellung von Brennstoff welches folgende Verfahrensschritte aufweist
(a) Herstellung von Holzkleinteilen,
(b) Zugabe eines Zusatzstoffes gemäß einem der vorhergehenden Ansprüche und Informbringen der Holzkleinteile zusammen mit dem Zusatzstoff.

14. Verfahren zur Herstellung von Brennstoff gemäß Anspruch 13, **dadurch gekennzeichnet, dass** der Zusatzstoff nach dem Informbringen zugegeben wird.

15. Verfahren zur Herstellung von Brennstoff gemäß Anspruch 14, **dadurch gekennzeichnet, dass** der Zusatzstoff vor dem Informbringen zugegeben wird.

16. Verfahren zur Herstellung von Brennstoff gemäß Anspruch 13, 14 oder 15 **dadurch gekennzeichnet, dass** der Zusatzstoff auf mindestens seinen spezifischen Schmelzpunkt erhitzt wird.

## Geänderte Patentansprüche

### Geänderte Patentansprüche gemäss Regel 137(2) EPÜ.

**1.** Brennstoff, welcher Holzkleinteile aufweist,
wobei
die Holzkleinteile einen Zusatzstoff aufweisen,
**dadurch gekennzeichnet, dass** der Zusatzstoff aus 50 bis 60% Palmitinsäure, 40 bis 50% Stearinsäure, maximal 1% Laurinsäure, maximal 3% Myristinsäure und Spuren von Ölsäure besteht.

**2.** Verfahren zur Herstellung von Brennstoff welches folgende Verfahrensschritte aufweist
(a) Herstellung von Holzkleinteilen,
(b) Zugabe eines Zusatzstoffes gemäß Anspruch 1 und Informbringen der Holzkleinteile zusammen mit dem Zusatzstoff.

**3.** Verfahren zur Herstellung von Brennstoff gemäß Anspruch 2, **dadurch gekennzeichnet, dass** der Zusatzstoff nach dem Informbringen zugegeben wird.

**4.** Verfahren zur Herstellung von Brennstoff gemäß Anspruch 3, **dadurch gekennzeichnet, dass** der Zusatzstoff vor dem Informbringen zugegeben wird.

**5.** Verfahren zur Herstellung von Brennstoff gemäß Anspruch 2, 3 oder 4 **dadurch gekennzeichnet, dass** der Zusatzstoff auf mindestens seinen spezifischen Schmelzpunkt erhitzt wird.
